# NEUE EUROPÄISCHE PATENTSCHRIFT

(11) **EP 3 438 427 B2**
(45) Veröffentlichungstag und Bekanntmachung des Hinweises auf die Entscheidung über den Einspruch: **26.04.2023**
(45) Hinweis auf die Patenterteilung: 18.12.2019
(21) Anmeldenummer: 18184282.4
(22) Anmeldetag: 18.07.2018
(51) Int. Cl.: F01N 13/18, F02D 9/06, F02D 9/04, F02M 26/70, F16K 1/22

(54) **KLAPPENEINRICHTUNG**
FLAP DEVICE
DISPOSITIF FORMANT CLAPET

(30) Priorität: 31.07.2017 DE 102017117289
(43) Veröffentlichungstag der Anmeldung: 06.02.2019
(73) Patentinhaber: Friedrich Boysen GmbH & Co. KG, 72213 Altensteig (DE)
(72) Erfinder: STOCKINGER, Karl, 72224 Ebhausen-Rotfelden (DE); Roller, Volker, 72226 Simmersfeld (DE)
(74) Vertreter: Manitz Finsterwald Patent- und Rechtsanwaltspartnerschaft mbB

(56) Entgegenhaltungen:
- EP-A2- 1 772 598
- DE-A1- 2 339 097
- DE-A1-102013 206 550
- DE-A1-102015 221 953
- DE-B- 1 177 433
- DE-U1-202007 006 463
- JP-B2- 5 335 167
- US-A- 4 291 863
- US-A- 4 294 428
- US-A- 4 682 758

## Beschreibung

Die vorliegende Erfindung betrifft eine Klappeneinrichtung zur Steuerung eines Gasstroms durch eine Rohrleitung, insbesondere eine Abgasklappeneinrichtung für einen Abgasstrang eines Kraftfahrzeugs, mit einer Klappe, die drehfest mit einer Klappenwelle verbunden ist, und mit wenigstens einer Lagereinheit, mittels der die Klappenwelle verdrehbar gelagert ist.

Derartige Einrichtungen werden beispielsweise zum selektiven Verschließen von Abgaspfaden in Abgassystemen von Kraftfahrzeugen eingesetzt. Üblicherweise ist ein Stellantrieb vorgesehen, mittels welchem die Klappe zwischen einer den Abgasstrom freigebenden und einer den Abgasstrom sperrenden Stellung verdreht werden kann. Ein teilweises oder vollständiges Sperren des Abgasstroms kann zum Beispiel im Rahmen der Akustik-Auslegung von Abgasanlagen oder zum gezielten Erzeugen eines Gegendrucks erfolgen. Auch im Rahmen eines Abgasrückführungssystems zur innermotorischen Stickoxid-Reduzierung können Abgasklappen zum Einsatz kommen, zum Beispiel um einen Niederdruckpfad auf der Frischluftseite eines Verbrennungsmotors gezielt mit einer bestimmten Menge Abgas zu beaufschlagen. Prinzipiell können Klappeneinrichtungen der eingangs genannten Art auch im Ansaugsystem eines Verbrennungsmotors Verwendung finden.

Abgasklappen sind während des Betriebs hohen Temperaturen, beträchtlichen Temperaturschwankungen, verschiedenen Temperaturverläufen sowie mechanischen Belastungen ausgesetzt. Ein besonderes Problem sind Schwingungsbelastungen, welche durch motorische Anregung, durch Fahrbahnanregung oder aufgrund von Gaspulsation auftreten. Da eine spielfreie Lagerung von Abgasklappen und dergleichen mit vertretbarem Aufwand praktisch nicht möglich ist, besteht bei herkömmlichen Klappeneinrichtungen das Problem, dass es bei hinreichend ausgeprägter Schwingungsanregung und passender Anregungsfrequenz zu mechanischen Störgeräuschen kommt. Diese Störgeräusche resultieren im Allgemeinen aus dem wechselseitigen Anschlagen der Klappe an der Rohrleitung oder am zugehörigen Klappengehäuse sowie der Klappenwelle an der Lagereinheit. In der Praxis kann es durch diesen Effekt zu einem Rassel- oder Klingelgeräusch kommen, das in hohem Maße als störend empfunden wird.

Die DE 10 2013 206 550 A1 offenbart eine Abgasklappe, deren Welle unter Verwendung jeweiliger Dichtelemente in gegenüberliegenden Lagern sitzt. Die Dichtelemente sind als geschlitzte Metallringe ausgeführt, die unter radialer Vorspannung in den Lagern sitzen.

In der DE 10 2015 221 953 A1 ist eine Abgasklappe offenbart, deren Welle mittels eines Stützrings und einer Lagerbuchse im Abgasrohr gelagert ist. Zwischen der Lagerbuchse und dem Stützring ist eine Hülse aus Drahtgestrick angeordnet.

Die DE 20 2007 006463 U1 offenbart eine Drosselklappe, die mittels einer halbkugelförmigen Lagerbuchse im Gehäuse gelagert ist. Eine Spiralfeder spannt die Klappenachse gegen die Lagerbuchse vor.

Es ist eine Aufgabe der Erfindung, durch Schwingungsbelastung erzeugte Störgeräusche beim Betrieb von Klappeneinrichtungen zu verringern oder zu vermeiden.

Die Lösung der Erfindung erfolgt durch eine Klappeneinrichtung mit den Merkmalen des Anspruchs 1.

Bei einer erfindungsgemäßen Klappeneinrichtung ist zwischen der Klappenwelle und einem Aufnahmeabschnitt der Lagereinheit ein radialer Hohlraum ausgebildet, der in axialer Richtung durch jeweilige Ansatzflächen begrenzt ist. Erfindungsgemäß ist ein Dämpfungselement aus einem elastischen Material unter axialer und/oder radialer Verformung und/oder Vorspannung in dem Hohlraum eingeklemmt. Ein im Lagerbereich vorhandener Hohlraum wird also dazu genutzt, ein unter mechanischer Spannung stehendes Dämpfungselement unterzubringen. Die Bewegung des Verbundes aus Klappe und Klappenwelle wird durch das elastische Dämpfungselement gedämpft (insbesondere in radialer Richtung), so dass einem Aufschwingen bis zur Störfrequenz entgegengewirkt wird und Störgeräusche vermieden werden. Dadurch dass die Dämpfung direkt im Bereich der Lagerung erfolgt, ist sie besonders effektiv. Eine erfindungsgemäße Klappeneinrichtung erzeugt daher auch bei starken Gaspulsationen kaum oder keine Störgeräusche.

Die Begriffe "axial" und "radial" sind im Rahmen der vorliegenden Offenbarung in Bezug auf die bestimmungsgemäße Rotationsachse der Klappenwelle zu verstehen.

Bei einer erfindungsgemäßen Klappeneinrichtung kann eine radiale Vorspannung des Dämpfungselements durch eine Verformung hervorgerufen sein, die letztlich auf eine axiale Vorspannung zurückgeht. Bei einer solchen Ausgestaltung ist es nicht notwendig, das Dämpfungselement aktiv radial vorzuspannen, also radial zu beaufschlagen. Grundsätzlich ist es aber möglich, eine aktive radiale Vorspannung vorzusehen.

Das Dämpfungselement ist teilweise oder vollständig aus einem Drahtgestrick gefertigt. Derartige Materialien weisen eine ausreichende Elastizität und gleichzeitig eine hohe Temperaturbeständigkeit auf. Insbesondere kann das Dämpfungselement als Drahtgestrick-Pressling ausgeführt sein. Weiterhin kann das Dämpfungselement eine Drahtgestrick-Matte umfassen.

Eine Ausführungsform der Erfindung sieht vor, dass die Klappenwelle mittels wenigstens eines vom Dämpfungselement separaten Lagerelements radial in dem Aufnahmeabschnitt festgelegt ist, vorzugsweise mit Spiel. Es ist also bevorzugt, dass die Klappenwelle nicht mittels des Dämpfungselements gelagert ist. Das Dämpfungselement dient vielmehr vorzugsweise ausschließlich zur Dämpfung der Bewegung der Klappenwelle innerhalb des Spiels. Das Lagerelement kann eine Gleitlagerung für die Klappenwelle vorsehen und ist vorzugsweise ringförmig. Die Klappenwelle kann mit einem axialen und/oder mit einem radialen Spiel gelagert sein. Durch das Spiel ist eine ausreichende Beweglichkeit der Klappe in allen Betriebspunkten sichergestellt.

Vorzugsweise ist das Dämpfungselement auf einer von der Klappe abgewandten Seite des Lagerelements axial versetzt zu diesem in dem Hohlraum angeordnet. Dies erleichtert die Herstellung der Klappeneinrichtung insofern, als das Dämpfungselement bei bereits bestehender Drehlagerung von außen in den Hohlraum eingesetzt und gegebenenfalls durch ein Abschlusselement beaufschlagt werden kann.

An einer Innenwand des Hohlraums kann eine Stufe ausgebildet sein, durch die das Lagerelement in axialer Richtung festgelegt ist, insbesondere in einer von der Klappe weg weisenden Axialrichtung. Eine solche Stufe bildet einen axialen Anschlag für das Lagerelement und hält dieses auch bei einseitig offenem Hohlraum an der Lagereinheit. Das Dämpfungselement kann bei der Herstellung durch die entsprechende Öffnung in den Hohlraum eingesetzt werden, ohne dass die Gefahr eines unbeabsichtigten Lösens des Lagerelements besteht. Um den Aufbau weiter zu vereinfachen, kann das Dämpfungselement jedoch auch direkt an das Lagerelement angrenzend in dem Hohlraum angeordnet sein.

Das Lagerelement kann direkt oder indirekt an der Rohrleitung abgestützt sein. Dies ermöglicht eine besonders einfache Konstruktion der Lagereinheit.

Gemäß einer Ausführungsform der Erfindung ist das Dämpfungselement in einer radialen Richtung an einer Innenseite des Aufnahmeabschnitts abgestützt und durch ein separates Spannteil in einer axialen Spannrichtung beaufschlagt. Aufgrund der axialen Beaufschlagung drängt das elastische Material des Dämpfungselements radial nach innen (ein Ausweichen nach radial außen wird durch eine Wandung des Aufnahmeabschnitts verhindert), so dass sich ohne direkte radiale Beaufschlagung eine radiale Vorspannung ergibt. Das heißt das Dämpfungselement kann durch ein separates Spannteil sowohl axial als auch radial vorgespannt werden. Das separate Spannteil kann in axialer Richtung verstellbar sein, um eine Anpassung der Stärke der Vorspannung zu ermöglichen.

Die Lagereinheit kann eine an der Rohrleitung befestigte Lagerbuchse aufweisen, in welcher der Aufnahmeabschnitt ausgebildet ist. Eine solche Lagerbuchse ist einfach und kostengünstig herstellbar. Grundsätzlich könnte auch ein entsprechend geformter Abschnitt der Rohrleitung selbst den Aufnahmeabschnitt für die Klappenwelle bilden.

Die Erfindung sieht vor, dass zwischen der Klappenwelle und dem Dämpfungselement ein separates Gleitelement aus einem reibungsvermindernden Material, insbesondere aus Graphit oder Bornitrid, angeordnet ist. Dadurch wird eine stoffliche Trennung der Klappenwelle vom elastischen Material des Dämpfungselements mit entsprechender Verringerung der Reibungsbelastung erzielt.

Das Gleitelement ist ringförmig als Hülse ausgeführt. Ein solches Gleitelement ist besonders einfach und kostengünstig herstellbar.

Das Gleitelement kann in axialer Richtung geschlitzt sein, um eine Kompensation der Wärmeausdehnung der Klappenwelle zu ermöglichen und einer Verklemmung entgegenzuwirken. Insbesondere wenn das Gleitelement aus einem elastischen Material gefertigt ist, kann auch eine ungeschlitzte, also geschlossene Form vorgesehen sein.

Vorzugsweise sind das Gleitelement und das Dämpfungselement unverlierbar miteinander gekoppelt. Eine solche Kopplung kann beispielsweise über wenigstens ein Formschluss-Merkmal bewerkstelligt werden. Das Gleitelement und das Dämpfungselement können dann als Einheit gehandhabt werden.

Das Dämpfungselement kann im axialen Schnitt rechteckig und/oder im radialen Schnitt kreisförmig sein.

Ein Verfahren zum Herstellen einer wie vorstehend beschriebenen Klappeneinrichtung, kann folgende Schritte umfassen:
- Bereitstellen einer Lagereinheit und einer verdrehbar zu lagernden Klappe, die drehfest mit einer Klappenwelle verbunden ist,
- Einführen der Klappenwelle in einen Aufnahmeabschnitt der Lagereinheit derart, dass zwischen der Klappenwelle und dem Aufnahmeabschnitt ein radialer Hohlraum ausgebildet ist, der in einer axialen Richtung durch eine Ansatzfläche begrenzt ist,
- Einsetzen eines Dämpfungselements aus einem elastischen Material in den Hohlraum,
- Anordnen des Gleitelements zwischen der Klappenwelle und dem Dämpfungselement,
- Beaufschlagen des eingesetzten Dämpfungselements mittels eines Spannelements zumindest in einer auf die Ansatzfläche hin weisenden axialen Spannrichtung, um das Dämpfungselement unter axialer und/oder radialer Verformung und/oder Vorspannung in dem Hohlraum einzuklemmen, und
- direktes oder indirektes Fixieren des Spannelements an der Lagereinheit.

Das Dämpfungselement wird also an einem Ansatz abgestützt und axial zusammengedrückt. Das elastische Material des Dämpfungselements versucht dann in radialer Richtung auszuweichen, wodurch sich außer der axialen auch eine radiale Vorspannung ergibt. Somit ist es auf einfache Weise möglich, das Dämpfungselement sowohl axial als auch radial in dem Hohlraum einzuklemmen. Das eingeklemmte Dämpfungselement bewirkt ein Abfedern von Bewegungen der Klappenwelle, die unter anderem durch Gaspulsationen hervorgerufen werden. Auf diese Weise werden unerwünschte Störgeräusche, insbesondere Rassel- und Klingelgeräusche, beim Betrieb der Klappeneinrichtung verhindert.

Das Einsetzen des optional vorgesehenen Lagerelements in den Hohlraum kann - je nach Bauweise - vor oder nach dem Einsetzen des Dämpfungselements erfolgen.

Weiterbildungen der Erfindung sind auch den abhängigen Ansprüchen, der Beschreibung sowie den beigefügten Zeichnungen zu entnehmen.

Die Erfindung wird nachfolgend beispielhaft unter Bezugnahme auf die Zeichnungen beschrieben.
- Fig. 1: zeigt eine Lagereinheit einer erfindungsgemäßen Klappeneinrichtung in einer Schnittansicht.
- Fig. 2: zeigt ein Dämpfungselement der in Fig. 1 dargestellten Lagereinheit in einem unverformten Ausgangszustand.
- Fig. 3: zeigt das Dämpfungselement gemäß Fig. 2 in einem verformten Einbauzustand.

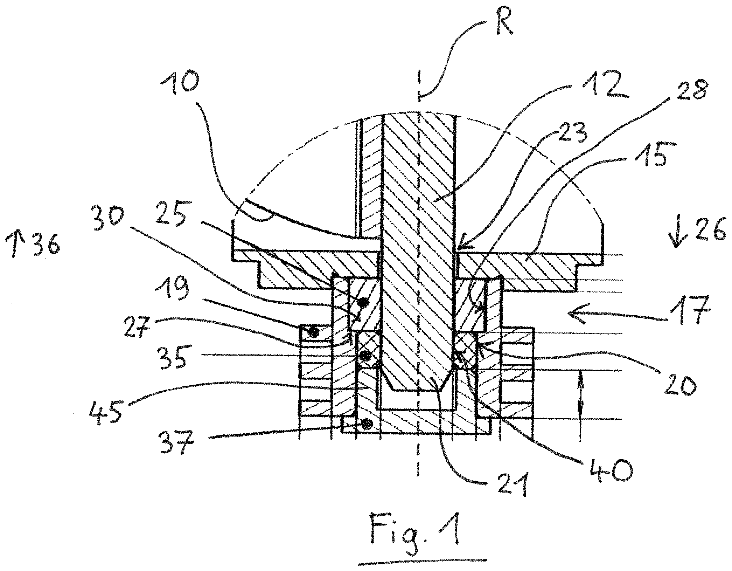

Die in Fig. 1 dargestellte erfindungsgemäße Klappeneinrichtung umfasst eine platten- oder scheibenartige, lediglich teilweise gezeigte Klappe 10, die an einer Klappenwelle 12 angebracht ist. Die Klappe 10 ist in einer Rohrleitung 15 angeordnet und mittels einer Lagereinheit 17 um eine Rotationsachse R drehbar gelagert. Bei der Rohrleitung 15 kann es sich um den Abschnitt einer Abgasleitung oder um ein (rohrförmiges) Klappengehäuse handeln. Durch Drehen der Klappe 10 kann ein durch die Rohrleitung 15 geführter Gasstrom, zum Beispiel ein Abgasstrom, wahlweise freigegeben und (teilweise) gesperrt werden.

Die Lagereinheit 17 umfasst eine an der Rohrleitung 15 befestigte Lagerbuchse 19, in welcher ein Aufnahmeabschnitt 20 für einen Wellenstummel 21 der Klappenwelle 12 ausgebildet ist. Der Wellenstummel 21 ist durch eine Wellendurchführung 23 der Rohrleitung 15 geführt und mittels eines ringförmigen Lagerelements 25 mit Spiel in der Lagerbuchse 19 gelagert. Die Klappe 10 kann einseitig gelagert sein. Alternativ kann die Klappenwelle 12 zwei gegenüberliegende Wellenstummel 21 aufweisen und beidseitig mittels jeweiliger Lagereinheiten 17 gelagert sein. Einer der Wellenstummel kann mit einer Antriebseinrichtung zum Antrieb der Welle 12 verbunden sein.

Wie in Fig. 1 erkennbar ist das Lagerelement 25 direkt an der Rohrleitung 15 abgestützt. Grundsätzlich könnte das Lagerelement 25 auch über zumindest ein zusätzliches Bauteil an der Rohrleitung 15 abgestützt sein. In einer von der Klappe 10 weg weisenden Axialrichtung 26 stützt sich das Lagerelement 25 an einer Stufe 27 ab, die an einer Innenwand 28 eines in der Lagerbuchse 19 radial zwischen der Klappenwelle 12 und dem Aufnahmeabschnitt 20 ausgebildeten Hohlraums 30 vorgesehen ist. In dem ringspaltförmigen Hohlraum 30 befindet sich ferner ein Dämpfungselement 35 aus einem elastischen Material, erfindungsgemäß aus einem Drahtgestrick.

Das Dämpfungselement 35 stützt sich in einer auf die Klappe 10 zu weisenden Axialrichtung 36 direkt an dem Lagerelement 25 ab. In der entgegengesetzten Axialrichtung 26 stützt sich das Dämpfungselement 35 an einem endseitig an der Lagerbuchse 19 fixierten Abschlusselement 37 der Lagereinheit 17 ab. Das Dämpfungselement 35 ist also zwischen dem Lagerelement 25, dem Abschlusselement 37 und der Innenwand 28 eingeklemmt und sowohl axial als auch radial vorgespannt. Die Bewegungen der Klappenwelle 12 relativ zur Rohrleitung 15 und zur Lagerbuchse 19, welche während des Betriebs der Klappeneinrichtung auftreten, werden durch das eingeklemmte elastische Dämpfungselement 35 gedämpft, so dass es auch bei ausgeprägten Druckpulsationen in der Rohrleitung 15 nicht zu unerwünschten Störgeräuschen kommt. Zu der geräuschmindernden Wirkung tragen sowohl die Elastizität des eingeklemmten Dämpfungselements 35 als auch die innere Reibung bei. Die Temperaturbeständigkeit des Dämpfungselements 35 kann in weiten Bereichen durch Auswahl eines entsprechenden Materials für das Drahtgestrick angepasst werden. Auch die Steifigkeit des Dämpfungselements 35 kann durch Materialauswahl auf einen gewünschten Wert eingestellt werden.

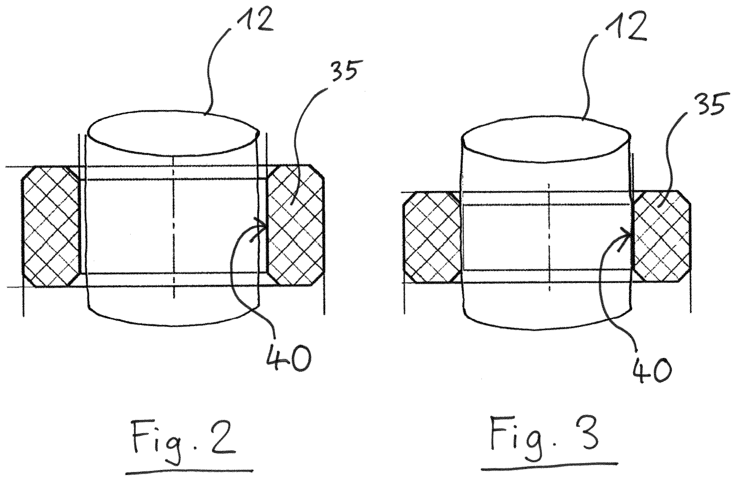

Zur Herstellung einer erfindungsgemäßen Klappeneinrichtung wird die Klappe 10 in der Rohrleitung 15 angeordnet und der Wellenstummel 21 der Klappenwelle 12 wird durch die Wellendurchführung 23 geführt. Das Lagerelement 25 wird auf den Wellenstummel 21 aufgesteckt und die Lagerbuchse 19 wird zur Bildung der Lagereinheit 17 an der Rohrleitung 15 befestigt. Das Dämpfungselement 35 wird dann in dem in Fig. 2 gezeigten unverformten Ausgangszustand in den Hohlraum 30 eingeführt, bis es am Lagerelement 25 anschlägt. Anschließend wird das Abschlusselement 37 in den Hohlraum 30 eingesetzt. Dabei wird das Dämpfungselement 35 durch einen Vorsprung 45 des Abschlusselements 37 beaufschlagt, so dass es zu einer axialen Vorspannung kommt. Die axiale Vorspannung wird durch das elastische Material des Dämpfungselements 35 in eine radiale Vorspannung umgesetzt, so dass das Dämpfungselement 35 auch radial in dem Hohlraum 30 eingeklemmt ist.

In dem in Fig. 3 gezeigten Einbauzustand ist das Dämpfungselement 35 somit sowohl in axialer als auch in radialer Richtung verformt und somit vorgespannt. Die Befestigung der Lagerbuchse 19 an der Rohrleitung 15 und die Fixierung des Abschlusselements 37 an der Lagerbuchse 19 können jeweils durch Verschweißen erfolgen.

Die Erfindung ermöglicht einen geräuscharmen Betrieb von Abgasklappen und ähnlichen Klappeneinrichtungen selbst bei starker Gasdruckpulsation in der zugehörigen Rohrleitung 15.

### Bezugszeichenliste

- 10: Klappe
- 12: Klappenwelle
- 15: Rohrleitung
- 17: Lagereinheit
- 19: Lagerbuchse
- 20: Aufnahmeabschnitt
- 21: Wellenstummel
- 23: Wellendurchführung
- 25: Lagerelement
- 26: Axialrichtung
- 27: Stufe
- 28: Innenwand
- 30: Hohlraum
- 35: Dämpfungselement
- 36: Axialrichtung
- 37: Abschlusselement
- 40: Innenseite
- 45: Vorsprung
- R: Rotationsachse

## Patentansprüche

1. Klappeneinrichtung zur Steuerung eines Gasstroms durch eine Rohrleitung (15), insbesondere Abgasklappeneinrichtung für einen Abgasstrang eines Kraftfahrzeugs,
mit einer Klappe (10), die drehfest mit einer Klappenwelle (12) verbunden ist, und mit wenigstens einer Lagereinheit (17), mittels der die Klappenwelle (12) verdrehbar gelagert ist,
wobei zwischen der Klappenwelle (12) und einem Aufnahmeabschnitt (20) der Lagereinheit (17) ein radialer Hohlraum (30) ausgebildet ist, der in axialer Richtung (26, 36) durch jeweilige Ansatzflâchen begrenzt ist,
und wobei ein Dâmpfungselement (35) aus einem elastischen Material unter axialer und/oder radialer Verformung und/oder Vorspannung in dem Hohlraum (30) eingeklemmt ist,
**dadurch gekennzeichnet , dass**
zwischen der Klappenwelle (12) und dem Dâmpfungselement (35) ein Gleitelement aus einem reibungsvermindernden Material angeordnet ist, wobei das Gleitelement eine ringförmige Hülse ist, wobei das Dâmpfungselement (35) teilweise oder vollständig aus einem Drahtgestrick gefertigt ist und wobei das Gleitelement ein separates Gleitelement ist.

2. Klappeneinrichtung nach Anspruch 1,
**dadurch gekennzeichnet , dass**
die Klappenwelle (12) mittels wenigstens eines vom Dâmpfungselement (35) separaten Lagerelements (25) radial in dem Aufnahmeabschnitt (20) festgelegt ist, vorzugsweise mit Spiel.

3. Klappeneinrichtung nach Anspruch 2,
**dadurch gekennzeichnet , dass**
das Dâmpfungselement (35) auf einer von der Klappe (10) abgewandten Seite des Lagerelements (25) axial versetzt zu diesem in dem Hohlraum (30) angeordnet ist.

4. Klappeneinrichtung nach Anspruch 2 oder 3,
**dadurch gekennzeichnet , dass**
an einer Innenwand (28) des Hohlraums (30) eine Stufe (27) ausgebildet ist, durch die das Lagerelement (25) in axialer Richtung festgelegt ist, insbesondere in einer von der Klappe (10) weg weisenden Axialrichtung (26).

5. Klappeneinrichtung nach einem der Ansprüche 2 bis 4,
**dadurch gekennzeichnet , dass**
das Lagerelement (25) direkt oder indirekt an der Rohrleitung (15) abgestützt ist.

6. Klappeneinrichtung nach zumindest einem der vorstehenden Ansprüche,
**dadurch gekennzeichnet , dass**
das Dâmpfungselement (35) in einer radialen Richtung an einer Innenseite des Aufnahmeabschnitts (20) abgestützt und durch ein separates Spannteil (37) in einer axialen Spannrichtung (36) beaufschlagt ist.

7. Klappeneinrichtung nach zumindest einem der vorstehenden Ansprüche,
**dadurch gekennzeichnet , dass**
die Lagereinheit (17) eine an der Rohrleitung (15) befestigte Lagerbuchse (19) aufweist, in welcher der Aufnahmeabschnitt (20) ausgebildet ist.

8. Klappeneinrichtung nach zumindest einem der vorstehenden Ansprüche,
**dadurch gekennzeichnet , dass** zwischen der Klappenwelle (12) und dem Dämpfungselement (35) ein Gleitelement aus Graphit oder Bornitrid angeordnet ist.

9. Klappeneinrichtung nach zumindest einem der vorstehenden Ansprüche,
**dadurch gekennzeichnet , dass**
das Gleitelement in axialer Richtung geschlitzt ist.

10. Klappeneinrichtung nach zumindest einem der vorstehenden Ansprüche,
**dadurch gekennzeichnet, dass**
das Gleitelement und das Dämpfungselement (35) unverlierbar miteinander gekoppelt sind.

11. Klappeneinrichtung nach zumindest einem der vorstehenden Ansprüche,
**dadurch gekennzeichnet , dass**
das Dämpfungselement (35) im axialen Schnitt rechteckig und/oder im radialen Schnitt kreisringförmig ist.

## Claims

1. A flap device for controlling a gas flow through a pipe (15), in particular an exhaust gas flap device for an exhaust train of a motor vehicle,
having a flap (10) which is rotationally fixedly connected to a flap shaft (12) and having at least one support unit (17) by means of which the flap shaft (12) is rotatably supported,
wherein a radial hollow space (30) which is bounded in an axial direction (26, 36) by respective attachment surfaces is formed between the flap shaft (12) and a reception section (20) of the support unit (17);
and wherein a damping element (35) composed of an elastic material is clamped in the hollow space (30) with axial and/or radial deformation and/or preload,
**characterized in that**
a sliding element composed of a friction-reducing material is arranged between the flap shaft (12) and the damping element (35), with the sliding element being a ring-shaped sleeve, with the damping element (35) being partly or completely produced from a wire mesh and with the sliding element being a separate sliding element.

2. A flap device in accordance with claim 1,
**characterized in that**
the flap shaft (12) is radially fixed, preferably with clearance, in the reception section (20) by means of at least one support element (25) separate from the damping element (35).

3. A flap device in accordance with claim 2,
**characterized in that**
the damping element (35) is arranged in the hollow space (30) axially offset from the support element (25) at a side of said support element (25) remote from the flap (10).

4. A flap device in accordance with claim 2 or claim 3,
**characterized in that**
a step (27) by which the support element (25) is fixed in an axial direction, in particular in an axial direction (26) facing away from the flap (10), is formed at an inner wall (28) of the hollow space (30).

5. A flap device in accordance with any one of the claims 2 to 4,
**characterized in that**
the support element (25) is directly or indirectly supported at the pipe (15).

6. A flap device in accordance with at least one of the preceding claims,
**characterized in that**
the damping element (35) is supported in a radial direction at an inner side of the reception section (20) and is acted on by a separate tensioning part (37) in an axial tensioning direction (36).

7. A flap device in accordance with at least one of the preceding claims,
**characterized in that**
the support unit (17) has a bearing bushing (19) which is fastened to the pipe (15) and in which the reception section (20) is formed.

8. A flap device in accordance with at least one of the preceding claims,
**characterized in that**
a sliding element composed of graphite or boron nitride is arranged between the flap shaft (12) and the damping element (35).

9. A flap device in accordance with at least one of the preceding claims,
**characterized in that**
the sliding element is slit in an axial direction.

10. A flap device in accordance with at least one of the preceding claims,
**characterized in that**
the sliding element and the damping element (35) are captively coupled to one another.

11. A flap device in accordance with at least one of the preceding claims,
**characterized in that**
the damping element (35) is rectangular in the axial section and/or circular in the radial section.

## Revendications

1. Dispositif à clapet pour la commande d'un flux de gaz à travers un conduit tubulaire (15), en particulier dispositif à clapet de gaz d'échappement pour un systéme d'échappement d'un véhicule automobile,
comportant un clapet (10) relié solidairement en rotation à un arbre de clapet (12), et au moins une unité de palier (17) au moyen de laquelle l'arbre de clapet (12) est monté de façon mobile en rotation,
dans lequel
une cavité radiale (30) est réalisée entre l'arbre de clapet (12) et une portion de réception (20) de l'unité de palier (17), ladite cavité étant délimitée dans la direction axiale (26, 36) par des surfaces d'appui respectives, et un élément amortisseur (35) en un matériau élastique est serré dans la cavité (30) sous déformation et/ou précontrainte axiale et/ou radiale, **caractérisé en ce que**
un élément coulissant en un matériau réduisant le frottement est disposé entre l'arbre de clapet (12) et l'élément amortisseur (35), l'élément coulissant étant un manchen de forme annulaire,
l'élément amortisseur (35) étant partiellement ou complétement fabriqué d'un treillis métallique tricoté et l'élément coulissant étant un élément coulissant séparé.

2. Dispositif à clapet selon la revendication 1,
**caractérisé en ce que**
l'arbre de clapet (12) est immobilisé radialement dans la portion de réception (20), de préférence avec jeu, à l'aide d'au moins un élément de palier (25) séparé de l'élément amortisseur (35).

3. Dispositif à clapet selon la revendication 2,
**caractérisé en ce que**
l'élément amortisseur (35) est disposé dans la cavité (30) sur un côté de l'élément de palier (25) détourné du clapet (10), en étant axialement décalé dudit élément de palier.

4. Dispositif à clapet selon la revendication 2 ou 3,
**caractérisé en ce que**
un étage (27) est réalisé sur une paroi intérieure (28) de la cavité (30), étage par lequel l'élément de palier (25) est immobilisé dans une direction axiale, en particulier dans une direction axiale (26) dirigée en éloignement du clapet (10).

5. Dispositif à clapet selon l'une des revendications 2 à 4,
**caractérisé en ce que**
l'élément de palier (25) est supporté directement ou indirectement sur le conduit tubulaire (15).

6. Dispositif à clapet selon l'une au moins des revendications précédentes,
**caractérisé en ce que**
l'élément amortisseur (35) est supporté dans une direction radiale sur un côté intérieur de la portion de réception (20) et est sollicité dans une direction de serrage axiale (36) par une partie de serrage séparée (37).

7. Dispositif à clapet selon l'une au moins des revendications précédentes,
**caractérisé en ce que**
l'unite de palier (17) comprend un coussinet de palier (19) qui est fixé sur le conduit tubulaire (15) et dans lequel est réalisée la portion de réception (20).

8. Dispositif à clapet selon l'une au moins des revendications précédentes,
**caractérisé en ce que**
un élément coulissant en graphite ou en nitrure de bore est disposé entre l'arbre de clapet (12) et l'élément amortisseur (35).

9. Dispositif à clapet selon l'une au moins des revendications précédentes,
**caractérisé en ce que**
l'élément coulissant est fendu dans la direction axiale.

10. Dispositif à clapet selon l'une au moins des revendications précédentes,
**caractérisé en ce que**
l'élément coulissant et l'élément amortisseur (35) sont couplés l'un à l'autre de façon imperdable.

11. Dispositif à clapet selon l'une au moins des revendications précédentes,
**caractérisé en ce que**
l'élément amortisseur (35) est rectangulaire en coupe axiale et/ou il est en forme d'anneau circulaire en coupe radiale.
